# FASCICULE DE BREVET EUROPEEN

(11) **EP 0 518 754 B1**
(45) Date de publication et mention de la délivrance du brevet: **18.09.1996**
(21) Numéro de dépôt: 92401592.8
(22) Date de dépôt: 10.06.1992
(51) Int. Cl.: H01M 10/40, H01B 1/12, G02F 1/15

(54) **Matériau solide conducteur ionique, à partir d'un polymère et d'un sel de cation alcalin, application comme électrolyte**
Fester ionenleitender Stoff hergestellt aus einem Polymer und einem alkalischen Kationsalz und Anwendung als Elektrolyt
Solid ionically conducting material, produced from a polymer and alkali metal salt and application as electrolyte

(30) Priorité: 14.06.1991 FR 9107283
(43) Date de publication de la demande: 16.12.1992
(73) Titulaire: SAINT-GOBAIN VITRAGE, F-92400 Courbevoie (FR)
(72) Inventeur: Paul, Jean-Luc, F-33000 Bordeaux (FR); Lassegues, Jean-Claude, F-33600 Pessac (FR)
(74) Mandataire: Muller, René

(56) Documents cités:
- US-A- 4 576 882
- Derwent Publications Ltd., London, GB; AN 87-211454

## Description

L'invention concerne des matériaux solides conducteurs ioniques, susceptibles d'être utilisés comme électrolytes.

Plus précisément, elle a pour objet des matériaux constitués à partir de solutions solides de polymères et de sels de métaux alcalins, tels que des sels de lithium, présentant une conductivité ionique suffisante pour les employer en tant qu'électrolyte dans des vitrages électrochromes, c'est-à-dire dans des vitrages dont la transmission lumineuse est modifiable sous l'action d'une différence de potentiel de par la présence d'une couche d'un matériau électrochrome, tel que l'oxyde de tungstène WO₃, ayant la particularité de changer de coloration sous l'effet d'une insertion réversible de cations.

Il est désormais bien connu d'associer des sels de métaux alcalins à une matrice polymère basique présentant des hétéroatomes tels que l'oxygène comme le poly(oxyde d'éthylène) (POE), ou l'azote, comme la poly(éthylène imine) (PEI). La conduction ionique du matériau ainsi constitué est obtenue par dissociation du sel, le cation étant solvaté par l'intermédiaire des doublets électroniques libres des hétéroatomes de polymère, l'anion quant à lui étant selon divers auteurs solvaté par le polymère via des liaisons hydrogènes. (M.B. Armand, Annual Review of Materials Science. 1986.16.245:261).

Jusqu'à présent, les travaux les plus nombreux ont porté sur des électrolytes à base de poly(oxyde d'éthylène) (POE), qui ont l'avantage de procurer des conductivités ioniques relativement élevées. Néanmoins, ce critère de la conductivité ionique n'est pas le seul à prendre en compte lors de la sélection d'un matériau macromoléculaire.

Il est par exemple souhaitable que le polymère soit conducteur aux températures de travail envisagées, ce qui dans le cas d'un système électrochrome suppose une bonne conduction à température ambiante. Or, il est connu que les polymères ici étudiés ne sont conducteurs que s'ils présentent une structure amorphe, c'est-à-dire désorganisée, structure la plus apte à dissocier et à solvater le sel. Toute amorce de cristallisation fait augmenter l'énergie de cohésion du polymère et a des conséquences néfastes sur la conductivité ionique du matériau.

Une telle structure amorphe n'est obtenue qu'en se plaçant à une température supérieure à la température de transition vitreuse Tg qui doit donc être la plus basse possible. Par ailleurs, à cette structure amorphe vient s'ajouter la nécessité d'un comportement élastique utile à la conductivité ionique car favorisant la flexibilité, la mobilité des segments de polymère. Il facilite également la mise en oeuvre du matériau final. Il peut être par ailleurs noté que cette caractéristique est d'autant plus difficile à appréhender que la valeur de Tg peut évoluer en fonction de la quantité de sel solvaté dans le polymère, et doit donc se maintenir à un chiffre bas aux concentrations usuelles de sel ajouté.

D'autre part, indépendamment de la température de fonctionnement, il est souhaitable que le polymère présente à température ambiante, une plasticité suffisante pour être incorporé en couche mince avec une bonne adhérence aux autres couches du système.

Dans le cas du POE, une conductivité ionique de 10⁻⁵ ohm⁻¹ cm⁻¹, valeur jugée communément minimale pour faire jouer au matériau un rôle d'électrolyte, n'est obtenue que si le matériau est porté à une température supérieure à 80°C, comme préconisé dans le brevet FR-2 442 514. Cependant, si chauffer à des températures supérieures à 80°C est admissible pour des applications dans des générateurs électrochimiques, il n'en est pas systématiquement de même dans le cas des vitrages électrochromes où les autres couches du système peuvent être endommagées.

D'autre part, soumettre une couche de polymère à de si hautes températures peut entraîner son vieillissement accéléré et une dégradation de sa tenue mécanique.

Dans le cas du PEI, il a été proposé (C.S. Harris, Macromolecules 1987. 20: 1778-1781) pour améliorer le caractère amorphe et flexible de la poly(éthylène imine) PEI d'utiliser non plus de la PEI linéaire, mais de la PEI ramifiée, également appelée « branchée » (BPEI), celle-ci présentant une certaine proportion relative d'atomes d'azote primaires, secondaires et tertiaires. Cependant, pour atteindre des conductivités supérieures ou égales à 10⁻⁵ ohm⁻¹.cm⁻¹, il faut amener ce polymère à 90°C, température a priori trop élevée à la fois pour que le polymère lui-même et pour les autres couches du système électrochrome. De plus, l'étude se limite au cation Na⁺, alors que dans l'état actuel de la technique, les systèmes électrochromes sont basés sur l'insertion réversible, par certains matériaux, soit de protons, soit de cations lithium Li⁺, et non de cations sodium Na⁺.

Les auteurs de la présente invention ont cherché à tirer avantage de ce caractère amorphe et flexible des matériaux constitués d'une solution solide de BPEI et de sel de lithium, à basse température, notamment à des températures proches de l'ambiante, tout en améliorant la conductivité ionique pour permettre son emploi comme électrolyte, notamment dans un système électrochrome.

L'invention consiste à associer en solution solide un polymère en poly(éthylène imine) branchée (BPEI) et un sel de métal alcalin tel que le cation lithium Li⁺, et à ajuster la proportion de ces deux constituants de manière à ce que le rapport N/Li⁺ du nombre d'atomes d'azote compris dans la BPEI sur celui des cations Li⁺ provenant du sel soit compris entre 12 et 6, ceci afin d'obtenir une conductivité ionique optimisée. On précise que ce nombre d'atomes d'azote N est en fait calculé à partir de la formule moyenne de la BPEI, c'est-à-dire (-CH₂-CH₂-NH), ce qui revient à dire que le rapport N/Li⁺ correspond au nombre moyen de motifs de répétition de la BPEI sur le nombre de cations lithium. En outre, le matériau solide conducteur selon l'invention comprend également un plastifiant de la BPEI sous forme de poly(éthylèneglycol) PEG de masse molaire inférieure à 600.

Les auteurs de l'invention ont tout d'abord étudié l'évolution de la conductivité ionique d'un tel matériau mais dépourvu de plastifiant de le BPEI, en fonction à la fois de la concentration en sel et de la température. Ils ont alors montré que le maximum de conductivité est atteint, soit 10⁻⁶ ohm⁻¹.cm⁻¹ à 25°C et 3,3.10⁻⁵ ohm⁻¹.cm⁻¹ à 60°C pour une concentration en sel assez faible, correspondant au rapport N/Li⁺ d'environ 20, la valeur de 60°C étant assez modérée pour être envisageable dans un système électrochrome.

Autrement dit, au-delà d'une certaine concentration en sel, le nombre de porteurs de charge semble non seulement stagner mais aussi diminuer, par le phénomène bien connu de formation de paires d'ions voire de multiplets.

Il est à noter également que, comme les exemples ci-dessous le montreront, les valeurs de Tg de la BPEI seule et de la BPEI en présence du sel sont très basses, notamment pour ce rapport N/Li⁺ de 20, ce qui donne au matériau un caractère nettement amorphe élastique dès la température ambiante, facteur extrêmement favorable pour l'application visée.

Selon l'invention, pour abaisser cette valeur de Tg et augmenter très sensiblement la conductivité ionique du matériau, on ajoute aux deux constituants précédents, c'est-à-dire à la BPEI et au sel de lithium, un plastifiant de la BPEI.

Les auteurs ont obtenu des résultats satisfaisants avec du poly(éthylèneglycol) PEG, de masse molaire inférieure à 600 et notamment d'environ 400.

De manière très avantageuse, l'addition de plastifiant permet d'accroître la concentration en sel, l'optimisation du rapport N/Li⁺ étant obtenue, comme déjà mentionné, pour des valeurs comprises entre 12 et 6, notamment 4 et 12, de préférence entre 6 et 10 et plutôt environ 8. A noter que ces valeurs ont été sélectionnées après optimisation également de la proportion du plastifiant, et notamment du PEG, par rapport à la BPEI. Dans le cas du PEG, on exprime cette proportion par un pourcentage (% PEG) qui correspond au rapport du nombre de motifs (O-CH₂-CH₂) du PEG sur le nombre global des motifs (O-CH₂-CH₂) du PEG et (CH₂-CH₂-NH) de la BPEI. Ce pourcentage de PEG est avantageusement choisi entre 10 et 70 %, de préférence entre 20 et 60 % et notamment d'environ 50 %.

Ainsi, en optimisant à la fois le rapport N/Li⁺ aux alentours de 8 et la proportion de PEG (% PEG) vers 50 %, on atteint soit des conductivités beaucoup plus élevées, notamment égales à 10⁻⁴ ohm⁻1.cm⁻¹ à 60°C, soit des conductivités plus modérées mais à température ambiante cette fois : le matériau présente une conductivité de 10⁻⁵ ohm⁻¹.cm⁻¹ à 25°C.

On a donc ainsi mis en évidence le rôle primordial d'un plastifiant sur la conductivité du matériau. Ce plastifiant pourrait en fait agir sur deux plans. Il jouerait tout d'abord son rôle fondamental en abaissant encore les valeurs de Tg et en favorisant une meilleure dynamique des chaînes de la BPEI, mais il est aussi possible qu'il intervienne également directement par l'intermédiaire de ses atomes d'oxygène dans le cas du PEG sur la solvatation des cations Li⁺. Ceci expliquerait pourquoi le matériau présente une conductivité améliorée à très forte concentration en sel alcalin, alors que, sans le plastifiant, de telles concentrations ne sont pas favorisées car elles dépassent en quelque sorte la capacité de solvatation du polymère, les anions et cations du sel risquant de s'amalgamer en paires ou agglomérats neutres et cristallins.

Ce choix d'utiliser un plastifiant facilite grandement la mise en oeuvre du matériau sous forme de couches minces, et notamment permet une meilleure adhérence de ces couches dans un empilement type électrochrome.

La BPEI préférée, dans le cadre de l'invention a une masse molaire comprise entre 50000 et 60000 et un rapport de ses nombres d'azotes primaires/secondaires/tertiaires compris entre 1/2/1 et 1/1,33/1.

De plus, l'anion du sel de lithium est de préférence choisi parmi les anions suivants : l'anion trifluorométhane sulfonate CF₃SO₃⁻, l'anion perchlorate ClO₄⁻, l'anion thiocyanate SCN⁻ et l'anion tétrafluoroborate BF₄⁻.

Le mode de préparation, l'analyse et les résultats de différents exemples de réalisation de l'invention vont maintenant être décrits à l'aide des graphes 1 à 6, qui figurent sur les 3 planches annoncées à ce mémoire et qui permettent de préciser la portée et les avantages de l'invention.

Les exemples 1 à 12 suivants concernent, pour les six premiers, des matériaux à base de BPEI et du sel de lithium LiCF₃SO₃, et pour les six derniers, des matériaux similaires mais dans lesquels la BPEI est plastifiée par du PEG. La formule générale des matériaux selon l'ensemble des exemples est donc la suivante : (1-y) BPEI, (x) LiCF₃SO₃, (y) PEG.

x désigne le rapport N/Li⁺ c'est-à-dire le nombre de cation Li⁺ par motif moyen (-CH₂CH₂NH-) de la BPEI.

y caractérise la proportion de motifs ether oxyde (-CH₂CH₂O-) constitutifs du PEG. Ainsi défini, y est compris entre 0 et 1.

Les caractéristiques des produits utilisés sont les suivantes :
- la poly(éthylène imine) branchée BPEI provient de la société Aldrich. Elle a une masse moléculaire moyenne comprise entre 50000 et 60000 à 50 % en poids dans l'eau. Il s'agit d'un polymère branché dans lequel la proportion d'amine primaire, secondaire et tertiaire est estimée à 1/1,33/1 voire 1/2/1 ; sa viscosité est très élevée. Amorphe à température ambiante, il présente une température de transition vitreuse (Tg) de -47°C. La conductivité ionique du polymère pur est d'environ 10⁻⁹ ohm⁻¹.cm⁻¹.
- le poly(éthylène glycol) PEG 400 provient de la société Fluka. Sa masse moléculaire moyenne est comprise entre 380 et 420. Présentant un point de fusion compris entre 1 et 5°C, il est liquide à 20°C et sa viscosité est de 120 mPa.s.
- le trifluoromethane sulfonate de lithium LiCF₃SO₃ est commercialisé par la société Aldrich.

Dans tous les exemples, les étapes du procédé d'élaboration des matériaux sont au nombre de trois.

Tout d'abord, chacun des produits sus mentionnés doit être fortement déshydraté avant le mélange. La BPEI en solution aqueuse ainsi que le sel LiCF₃SO₃ sont déshydratés sous un vide inférieur à 10 mtorr, à 60°C pour la BPEI, à 150°C pour le sel, et ce, pendant 72 heures. Le PEG quant à lui est stocké sur tamis moléculaire (4 A) pendant au minimum une semaine avant utilisation, afin de présenter moins de 200 ppm d'eau.

Puis le sel est ajouté à la BPEI pure en boîte à gants sous flux d'argon. La quantité de sel est ajustée en fonction de la concentration désirée. Du méthanol commercial à moins de 300 ppm d'eau est ajouté à raison de 15 cm³ pour 5g environ de produit. La solution est agitée jusqu'à homogénéisation totale. A ce stade, et pour les mélanges plastifiés (y ≠ O), le PEG est ajouté en des proportions ad hoc et la solution est agitée de nouveau.

Enfin, les mélanges sont déshydratés par chauffage sous vide (60°C maximum sous moins de 10 mtorr de pression pendant 72 heures). Les produits sont conservés dans une boîte sèche sous flux d'argon.

On précise que cette technique est facilement applicable à tous les sels de lithium usuels, dans la mesure où le polymère et le sel ont un solvant commun. De même, d'autres plastifiants équivalents au PEG peuvent être incorporés à la place de celui-ci à la BPEI.

### EXEMPLES 1 A 6

Cette première série de matériaux a été réalisée à base de BPEI et de LiCF₃SO₃. Le tableau ci-dessous indique, pour chaque matériau final, le rapport N/Li⁺ choisi et la valeur de transition vitreuse Tg mesurée en degrés centigrades.

A titre d'illustration du procédé d'élaboration précédemment décrit, il est indiqué que, dans le cas de l'exemple 5 où le rapport N/Li⁺ est égal à 20, on ajoute à 8,714 grammes de BPEI séchée, 1,58 gramme de LiCF₃SO₃ et environ 15 cm³ de méthanol.

| Exemples | 1 | 2 | 3 | 4 | 5 | 6 | BPEI seule |
|---|---|---|---|---|---|---|---|
| N/Li⁺ | 8 | 14 | 16 | 18 | 20 | 25 | - |
| Tg | -4,8 | -26,1 | -26,6 | -34,8 | - | -36,1 | -47 |

Si ce tableau montre, de façon assez prévisible, une augmentation de la valeur de Tg avec une augmentation de la concentration en sel, celle-ci reste cependant nettement en dessous de 0°C, et même de -30°C pour les exemples 4 et 6 qui s'avèrent les meilleurs conducteurs ioniques.

On mesure ensuite la conductivité des exemples 1 à 6 dans une gamme de températures allant d'environ 20 à 80°C, ce qui conduit aux graphes 1 et 2 de la planche 1 : le graphe 1 indiquant l'évolution du logarithme de la conductivité (en ohm⁻¹.cm⁻¹) en fonction du rapport N/Li⁺ à différentes températures T (°C), le graphe 2 indiquant l'évolution du même logarithme en fonction du facteur 1000/T(°K) pour chaque rapport N/Li⁺.

Le premier graphe met ainsi en évidence des courbes dont l'allure est approximativement celle d'une gaussienne, avec un rapport optimum N/Li⁺ pour chaque palier de température. Ainsi, dès 60°C, une conductivité supérieure à 10⁻⁵ ohm⁻¹.cm⁻¹ est obtenue avec les exemples 4, 5, 6, ce que l'on retrouve sous une autre forme au graphe 2. Le meilleur conducteur ionique est l'exemple 5, qui possède un rapport N/Li⁺ de 20, soit une concentration en sel faible.

Les spectres infra-rouge de ces six exemples montrent que lorsque la concentration en sel augmente, les bandes de vibration V(NH₂), V(CH₂) et V(C-N) de la BPEI, respectivement localisées à 3400-3300, 3000-2800 et 1200-1000 cm⁻¹, se déplacent, les deux premières vers des nombres d'onde 5 plus grands, la dernière vers des nombres d'onde plus faibles. Ceci résulte de la modification du réseau du polymère, dont les chaînes sont en interaction par l'intermédiaire de liaisons hydrogène NH...N. En effet, lorsqu'on ajoute un sel de lithium de formule générale Li⁺X⁻, qui, en se dissociant, créé de nouvelles interactions de type Li⁺...NH...X⁻, l'atome d'azote est alors soumis à la fois à une perte de densité électronique au profit du cation Li⁺ et à une augmentation de cette densité provenant de la solvatation de l'anion par l'intermédiaire de liaisons hydrogène. Le premier effet reste en valeur absolue plus grand que le second pour les anions X⁻ suivants : SCN⁻, CF₃SO₃⁻, ClO₄⁻.

On peut observer sur les spectres la solvatation du lithium Li⁺, par une large bande d'absorption vers 480 cm⁻¹.

Pour des concentrations de sel correspondant à des rapports N/Li⁺ inférieurs à 10, une nouvelle bande d'absorption apparaît vers 450 cm⁻¹, attribuable à l'apparition de paires ioniques et d'aggrégats ioniques provenant du sel non dissocié donc neutres, et freinant la conductivité ionique de l'ensemble.

### EXEMPLES 7 A 12

Une deuxième série de matériaux a été réalisée, qui sera comparée à la première. Est ajouté cette fois à la BPEI et au sel LiCF₃SO₃ un plastifiant : le PEG 400.

Le tableau ci-dessous indique pour chacun des exemples le rapport N/Li⁺, qui, ici, s'échelonne de 4 à 20, et la proportion de PEG par rapport à la BPEI (% PEG).

A titre indicatif, un matériau tel que celui de l'exemple 7, c'est-à-dire ayant un rapport N/Li⁺ de 4 et un % PEG de 50 %, est obtenu en ajoutant à 6,062 grammes de polymère BPEI séchée 5,50 grammes de LiCF₃SO₃ et environ 15 cm³ de méthanol. La solution contient alors 0,141 motif de BPEI. Puis, à 4 cm³ de cette solution, on ajoute 0,0376 motif de PEG, soit 1,733 gramme afin d'obtenir finalement la proportion de PEG de 50 % recherchée.

| **EXEMPLE S** | **7** | **8** | **9** | **10** | **11** | **12** |
|---|---|---|---|---|---|---|
| | | | | | | |
| N/Li⁺ | 4 | 8 | 12 | 12 | 20 | 20 |
| % PEG | 50 % | 50 % | 30 % | 50 % | 30 % | 50 % |

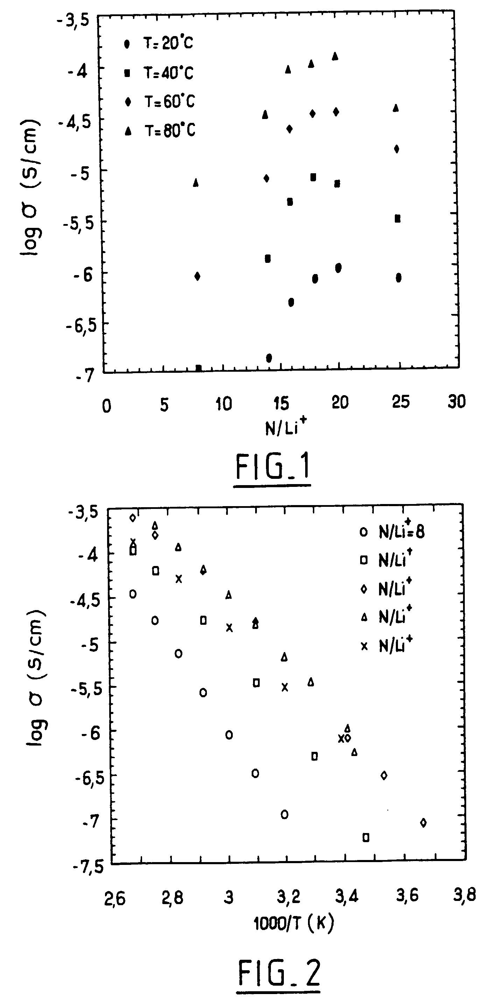

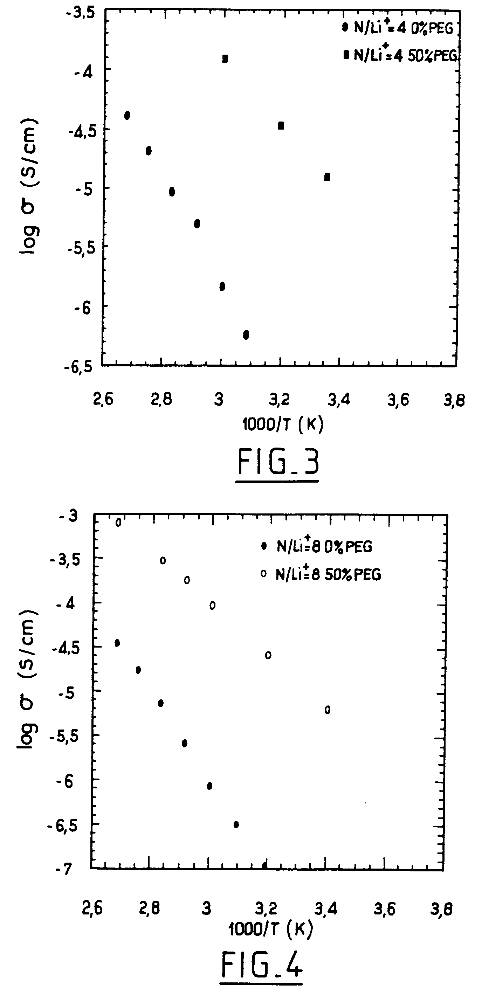

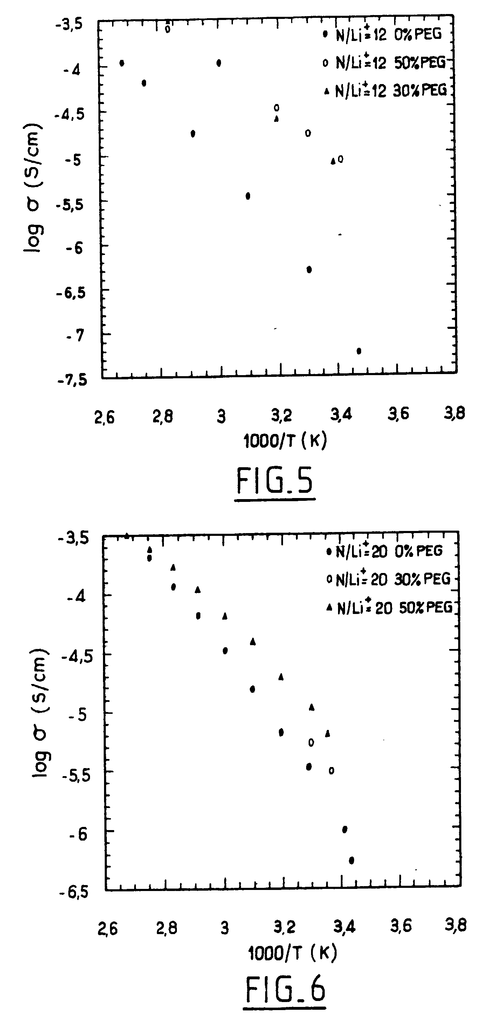

Les graphes 3, 4, 5, 6 des figures 2 et 3 indiquent le logarithme de la conductivité en ohm⁻¹.cm⁻¹ de ces matériaux en fonction de la température, représentée par 1000/T(°K), en comparaison avec des matériaux présentant le même rapport N/Li⁺, mais sans plastifiant, comme dans la première série.

Plusieurs constatations se dégagent de la lecture de ces graphes : tout d'abord, en regardant l'évolution de la conductivité ionique en fonction uniquement du rapport N/Li⁺, on note que, comme dans le cas de la première série, il existe un rapport optimum, au-delà et en-deça duquel la conductivité chute. Mais cette fois, ce maximum se situe à un rapport N/Li⁺ de 8, correspondant à l'exemple 8, c'est-à-dire à une concentration en sel de lithium beaucoup plus élevée que dans le cas de la première série.

Cependant, dans tous les cas, à rapport N/Li⁺ égal, la conductivité ionique du matériau est grandement améliorée lorsque la BPEI est plastifiée, ce qui ressort très clairement des graphes 3 à 6 qui indiquent également les valeurs de conductivité des mêmes matériaux, mais dépourvus de plastifiant (0 % PEG).

En outre, les graphes 5 et 6 correspondant aux exemples 9 à 12 permettent de mettre en évidence, à rapport N/Li⁺ identique, l'influence de la proportion de PEG sur la conductivité ionique, modeste ou non suivant la température à laquelle on place la matériau.

On retient surtout qu'avec un matériau du type de l'exemple 8, c'est-à-dire ayant un rapport N/Li⁺ de 8 et une proportion de PEG de 50 %, on obtient une conductivité ionique d'au moins 10⁻⁴ ohm⁻¹.cm⁻¹ à une température de 60°C, c'est-à-dire une excellente conductivité ionique à une température modérée parfaitement envisageable, ainsi qu'une conductivité d'au moins 10⁻⁵ ohm⁻¹.cm⁻¹ à température ambiante.

L'utilisation d'un plastifiant de la BPEI, et notamment du PEG, favorise donc de manière très importante la conductivité ionique du matériau, probablement à la fois en diminuant considérablement sa température de transition vitreuse et en participant lui-même à la solvatation des cations Li⁺.

A noter toutefois que des proportions trop importantes de PEG ne sont pas souhaitables car alors la tenue mécanique du matériau est fortement dégradée et il n'est plus filmogène, ce qui écarte des objectifs de l'invention dont un des buts est de mettre au point un électrolyte parfaitement solide et maniable.

Les solutions solides préparées selon l'invention, suivant les exemples 1 à 12 et tout particulièrement 7 à 12, trouvent, en raison de leur conductivité ionique dans une gamme de températures "raisonnables" et de leur facilité de mise en oeuvre, des applications à titre d'électrolytes dans tous les dispositifs générateurs électrochimiques.

Une application plus particulièrement visée par l'invention concerne leur emploi comme électrolyte dans des vitrages électrochromes qui sont essentiellement obtenus de la manière suivante : entre deux substrats en verre, on empile successivement une couche électroconductrice transparente, une électrode en matériau électrochrome à insertion réversible de Li⁺, un électrolyte comme décrit dans la présente invention, une contre-électrode présentant éventuellement aussi des propriétés électrochromes, et de nouveau une couche électroconductrice transparente similaire à la première.

Les couches électroconductrices sont par exemple en oxyde d'indium dopé à l'étain. L'électrode peut être constituée d'oxyde de tungstène WO₃.

La contre-électrode peut notamment être à base d'oxyde(s) de nickel hydroxylé(s) comme décrit dans la demande de brevet FR-2 639 441 ou à base d'oxydes de nickel prélithiés (oxydes mixtes de nickel et lithium). Ces oxydes peuvent en outre être "dopés", notamment par la présence de métaux tels que le cobalt, le manganèse ou des terres rares. Elle peut aussi être à base d'oxyde d'iridium, comme décrit dans la demande de brevet FR-2 629 222.

## Revendications

1. Matériau solide conducteur ionique constitué à partir de poly(éthylène imine) branchée BPEI et d'un sel de cation lithium Li⁺, **caractérisé en ce que** le rapport N/Li+ du nombre d'atomes d'azote N contenus dans la BPEI sur celui des cations lithium Li+ provenant du sel est compris entre 12 et 6, et **en ce qu'il** comprend également un plastifiant de la BPEI sous forme de poly(éthylène glycol) EPG de masse molaire inférieure à 600.

2. Matériau selon la revendication 1, **caractérisé en ce que** le rapport N/Li⁺ est environ égal à 8.

3. Matériau selon la revendication 1 ou 2, **caractérisé en ce que** le PEG a une masse molaire d'environ 400.

4. Matériau selon l'une des revendications précédentes, **caractérisé en ce que** le pourcentage du PEG (% PEG) par rapport à la BPEI est compris entre 10 et 70 %, notamment entre 20 et 60 % et de préférence d'environ 50 %.

5. Matériau selon l'une des revendications précédentes, **caractérisé en ce que** la BPEI a une masse molaire moyenne comprise entre 50000 et 60000 et présente un rapport de ses nombres d'atomes d'azote primaire/secondaire/tertiaire compris entre 1/2/1 et 1/1,33/1.

6. Matériau selon l'une des revendications précédentes, **caractérisé en ce que** l'anion du sel alcalin est choisi parmi l'anion trifluorométhane sulfonate CF₃SO₃⁻, l'anion thiocyanate SCN⁻, l'anion perchlorate ClO₄⁻ et l'anion tétrafluoroborate BF₄⁻.

7. Application du matériau selon l'une des revendications précédentes comme électrolyte dans des systèmes électrochromes, notamment des vitrages électrochromes.

## Patentansprüche

1. Ionenleitfähiges festes Material, das aus verzweigtem Polyethylenimin BPEI und einem Lithiumsalz gebildet ist, **dadurch gekennzeichnet, daß** das Verhältnis von N/Li⁺ der Anzahl der im BPEI enthaltenen Stickstoffatome N zur Anzahl der aus dem Salz stammenden Lithiumkationen Li⁺ 12 bis 6 beträgt und daß es auch für das BPEI einen Weichmacher in Form von Polyethylenglykol PEG mit einer Molmasse von unter 600 enthält.

2. Material nach Anspruch 1, **dadurch gekennzeichnet, daß** das Verhältnis von N/Li⁺ etwa gleich 8 ist.

3. Material nach Anspruch 1 oder 2, **dadurch gekennzeichnet, daß** das PEG eine Molmasse von etwa 400 besitzt.

4. Material nach einem der vorhergehenden Ansprüche, **dadurch gekennzeichnet, daß** der Prozentanteil des PEG (% PEG), bezogen auf das BPEI, zwischen 10 und 70 %, insbesondere zwischen 20 und 60 % und vorzugsweise etwa 50 % beträgt.

5. Material nach einem der vorhergehenden Ansprüche, **dadurch gekennzeichnet, daß** das BPEI eine mittlere Molmasse von 50 000 bis 60 000 und ein Verhältnis der Anzahl der primären/sekundären/tertiären Stickstoffatome von 1/2/1 bis 1/1,33/1 aufweist.

6. Material nach einem der vorhergehenden Ansprüche, **dadurch gekennzeichnet, daß** das Anion des Alkalisalzes aus dem Trifluormethansulfonatanion CF₃SO₃⁻, Thiocyanatanion SCN⁻, Perchloratanion ClO₄⁻ und dem Tetrafluorboratanion BF₄⁻ ausgewählt ist.

7. Verwendung des Materials nach einem der vorhergehenden Ansprüche als Elektrolyt in elektrochromen Systemen und insbesondere in elektrochromen Verglasungen.

## Claims

1. Solid ion conductor material, made from branched poly(ethylene imine) BPEI and a lithium cation salt Li⁺, characterized in that the ratio N/Li⁺ of the number of nitrogen atoms N contained in the BPEI to that of the lithium cations Li⁺ originating from the salt is from 12 to 6, and in that it comprises also a plasticizer for the BPEI in the form of poly(ethylene glycol) PEG of molecular mass less than 600.

2. Material according to Claim 1, characterized in that the ratio N/Li⁺ is approximately equal to 8.

3. Material according to Claim 1 or 2, characterized in that the PEG has a molecular mass of approximately 400.

4. Material according to one of the preceding Claims, characterized in that the percentage of PEG (% PEG) in relation to the BPEI is from 10 to 70%, notably from 20 to 60% and preferably approximately 50%.

5. Material according to one of the preceding Claims, characterized in that the BPEI has a mean molecular mass of from 50,000 to 60,000 and has a ratio of its primary/secondary/tertiary nitrogen atom numbers of between 1/2/1 and 1/1.33/1.

6. Material according to one of the preceding Claims, characterized in that the anion of the alkaline salt is chosen from among the trifluoromethane sulphonate anion CF₃SO₃⁻, the thiocyanate anion SCN⁻, the perchlorate anion ClO₄⁻ and the tetrafluoroborate anion BF₄⁻.

7. Application of the material according to one of the preceding Claims as electrolyte in electrochromic systems, notably electrochromic panes.
